# EUROPÄISCHE PATENTSCHRIFT

(11) **EP 3 441 129 B1**
(45) Veröffentlichungstag und Bekanntmachung des Hinweises auf die Patenterteilung: **02.09.2020**
(21) Anmeldenummer: 18185454.8
(22) Anmeldetag: 25.07.2018
(51) Int. Cl.: B01D 59/26, C01B 3/00, C01B 3/50, C01B 4/00

(54) **VERFAHREN UND VORRICHTUNG ZUR ANREICHERUNG ODER ABREICHERUNG MINDESTENS EINES WASSERSTOFFISOTOPS IN EINEM GASSTROM**
METHOD AND DEVICE FOR ENRICHING OR DEPLETING AT LEAST ONE HYDROGEN ISOTOPE IN A GAS STREAM
PROCÉDÉ ET DISPOSITIF PERMETTANT D'ENRICHIR OU D'APPAUVRIR EN AU MOINS UN ISOTOPE D'HYDROGÈNE UN FLUX DE GAZ

(30) Priorität: 09.08.2017 DE 102017213886
(43) Veröffentlichungstag der Anmeldung: 13.02.2019
(73) Patentinhaber: Karlsruher Institut für Technologie, 76131 Karlsruhe (DE)
(72) Erfinder: Giegerich, Thomas, 76872 Erlenbach (DE); Day, Christian, 76863 Herxheim (DE); Müller, Ralf, 76133 Karlsruhe (DE); Peters, Benedikt, 76135 Karlsruhe (DE); Hörstensmeyer, Yannik, 76133 Karlsruhe (DE)
(74) Vertreter: Altmann Stößel Dick Patentanwälte PartG mbB

(56) Entgegenhaltungen:
- GB-A- 1 008 475
- US-A- 2 780 526

## Beschreibung

### Gebiet der Erfindung

Die vorliegende Erfindung ist auf dem Gebiet der Verfahrenstechnik angesiedelt und betrifft ein Verfahren und eine Vorrichtung zur Anreicherung oder Abreicherung mindestens eines Wasserstoffisotops in einem Gasstrom. Diese Erfindung eignet sich insbesondere zur Abtrennung mindestens eines Wasserstoffisotops aus einem Gasstrom, insbesondere zur Abtrennung von Wasserstoffisotopen aus einem Wasserstoffstrom und/oder zur Abtrennung von Wasserstoff aus einem Inertgasstrom, insbesondere Helium.

### Stand der Technik

Aus dem Stand der Technik sind verschiedene Verfahren und Vorrichtungen zur Anreicherung oder Abreicherung und/oder Abtrennung von einem oder mehreren der Wasserstoffisotope Protium, Deuterium und Tritium aus einem Gasstrom bekannt. Diese Verfahren basieren darauf, dass sich die verschiedenen Isotope des Wasserstoffs, welcher als Gas oder Flüssigkeit vorliegen kann, unterschiedlich stark bewegen können, wodurch sich die Isotope voneinander trennen lassen. Eine Trennwirkung kann insbesondere dadurch entstehen, dass die verschiedenen Isotope des Wasserstoffs unterschiedlich gut an den Gasstrom umgebenden Oberflächen sorbieren (chromatografische Verfahren), unterschiedlich schnell eine Membran durchdringen (permeatorische Verfahren) oder unterschiedliche Siedepunkte aufweisen (kryogene Destillation) können.

Nachteilig an den bekannten Verfahren und Vorrichtungen ist, dass sie, insbesondere um eine Skalierbarkeit zu hohe Durchsätzen und hohen Reinheiten zu erzielen, in der Regel komplexe, aufwändige und damit störanfällige Apparaturen benötigen. Für die kryogene Destillation kann dies ein hohes Inventar an flüssigem und ggf. radioaktivem Wasserstoff (Tritium) sowie eine aufwändige kryogene Kälteversorgung erfordern. Permeatorische Verfahren, die mit Membranen arbeiten, benötigen eine aufwändige und komplexe Anlage, welche empfindlich auf Verunreinigungen reagieren kann. Chromatografische Verfahren erlauben demgegenüber nur begrenzt eine Skalierbarkeit zu hohen Durchsätzen.

T. Yamanishi, M. Enoeda, H. Yoshida, Y. Naruse, H. Fukui, H. Nagai, Y. Imamura, and K. Muta, Experimental Appratus for Cryogenic Hydrogen Isotope Separation Process in the Tritium Process Laboratory, Fusion Technology 14, Sept. 1988, S. 495-500, berichten über eine experimentelle Vorrichtung zur Entwicklung eines kyrogenen Trennungssystems für Wasserstoffisotope. Dieses besteht aus zwei Destillationskolonnen mit einer Ausgleichseinrichtung für Mischungen aus den drei Wasserstoffisotopen und lässt sich in einem Einzelkolonnenmodus oder einem Kaskadenmodus betreiben.

M. Enoeda, T. Yamanishi, H. Yoshida, and Y. Naruse, Hydrogen isotope separation characteristics ofcryogenic distillation column, Fusion Engineering and Design 10, 1989, S. 319-323, stellen die kryogene Destillation als vielversprechendes Verfahren zur Trennung von Wasserstoffisotopen dar. Die hierfür eingesetzte Vorrichtung umfasst eine kryogene Destillationskolonne, Gaschromatografen und einen Heliumkühlanlage.

R. Lässer, A. C. Bell, N. Bainbridge, D. Brennan, L. Dörr, J. L. Hemmerich, S. Knipe und R. Stagg, The Preparative Gas Chromatographie System of the JET Active Gas Handling System - Tritium Commissioning and Use during and after DTE1, Fusion Engineering and Design 47, 2-3, 1999, S. 301-309, beschreiben die Einrichtung zur präparativen Gaschromatographie (GC) at Joint European Torus (JET). Um Deuterium und Tritium mit einer Reinheit > 98 % herstellen zu können, wird Verschiebungsgaschromatographie mit Palladium als Material eingesetzt.

D. Ducret, A. Ballanger, J. Steimetz, C. Laquerbe, O. Baudouin, P. Sere Peyrigain, Hydrogen isotopes separation by thermal cycling absorption process, Fusion Engineering and Design 58-59, 2001, S. 417- 421, beschreiben ein verbessertes thermisches zyklisches Absorptionsverfahren (engl. Thermal Cycling Absorption Process, TCAP) zur Trennung von Wasserstoffisotopen. Zur Absorption eines Gasstromes aus Wasserstoffisotopen wird eine Kolonne mit einer Länge von 7 m eingesetzt, in welche Palladium unter Vermeidung von Totvolumina dichtgepackt eingebracht ist. Aufgrund unterschiedlicher Sorption der verschiedenen Wasserstoffisotope auf dem Palladium kann mittels einer thermischen Zyklierung eine höhere Konzentration des schweren Isotops Tritium an einem Ende der Kolonne und der leichteren Isotope an dem anderen Ende der Kolonne erzeugt werden. Zur Aufheizung ist die Kolonne von einem spulenförmigen Induktor mit einer Leistung von 6 kW umgeben. Zur Kühlung wird ein Kaltwasserkreislauf in einem Hohlkörper innerhalb der Kolonne eingesetzt, wobei das Wasser einen spiralförmigen Verlauf nimmt.

L. K. Heung, H. T. Sessions und S. Xiao, TCAP Hydrogen Isotope Separation Using Palladium and Inverse Columns, Fusion Science and Technology 60, 4, 2011, S. 1331-34, berichten, dass das TCAP-Verfahren dahingehend verbessert werden konnte, dass sich die Kolonne durch kleine elektrische Heizungen erwärmen bzw. durch mit flüssigem Stickstoff gefüllte Kühlrohre abkühlen lässt. Weiterhin berichten sie, dass in dem üblichen TCAP-Verfahren eine mit palladiumbeschichtetem Kieselgur gefüllte Kolonne sowie ein Kolbenstromreaktor (engl. plug flow reverser, PFR) verwendet wird, der über eine mit Kieselgur gefüllte Kolonne größeren Durchmessers, aber kürzerer Länge verfügt und der dazu eingesetzt wird, um den Strömungsverlauf zu verbessern. In Betrieb werden die Kolonne thermisch zykliert und der PFR bei Raumtemperatur belassen. Während der kalten Phase des Zyklus, bei der Gas aus dem PFR in die Kolonne fließt, konzentriert sich das schwerere Isotop an der Strömungsfront. Während der heißen Phase, bei der Gas aus der Kolonne in den PFR fließt, bleibt jedoch das Konzentrationsprofil erhalten. In jeder kalten Phase werden der Mitte der Kolonne neues Gas zugeführt, während in der heißen Phase schwere Isotope bzw. leichte Isotope von den entgegengesetzten Enden der Kolonne entfernt werden. Nachteilig an dieser Ausgestaltung ist, dass sich hierdurch zwar sehr gut schwere Isotope, nicht jedoch leichte Isotope anreichern lassen. Die Autoren schlagen daher vor, den PFR durch eine so genannte "inverse" Kolonne zu ersetzen, welche den entgegengesetzten Effekt der palladiumgefüllten Kolonne ausführt. Hierzu werden molekulare Siebe eingesetzt, welche sich dafür eignen, Wasserstoffisotope bei 77 K unterschiedlich zu sorbieren. Durch den Ersatz des PFR durch eine inverse Kolonne ließ sich der Durchsatz der Anlage verdoppeln.

DE 20 25 069 A offenbart ein gaschromatographisches Verfahren und eine zugehörige Vorrichtung zur kontinuierlichen adsorptiven Trennung einer Gasmischung, insbesondere von Deuterium und Tritium. Mittels eines palladiumhaltigen Granulats wird Tritium an diesem angereichert, und so das Gemisch getrennt. Es werden Temperiereinrichtungen eingesetzt, jedoch wird ein stationäres Sorbensbett verwendet.

WO 2012/036 749 A1 offenbart ebenfalls gattungsgemäße Verfahren und Vorrichtungen, welche auf dem o.g. thermischen zyklischen Absorptionsverfahren (TCAP) zur Trennung von Wasserstoffisotopen basieren. Auch hier wird wiederum das Gas aufgrund einer thermischen Zyklierung bewegt, nicht jedoch das Sorbens.

SINGH, V. P.: Separation of hydrogen isotopes by a flowing bed process, In: Fusion Technology, Vol. 14, 1988, No. 2P2A, S. 579-584, beschreibt eine Trennung von Wasserstoffisotopen mittels eines Fließbettes, welches ein bewegtes Sorbens umfasst. Hier wird somit das Sorbens bewegt, allerdings fällt dieses durch einen Apparat, in welchem auf verschiedenen Höhen das Gas abgezogen wird. Hierdurch kann es jedoch zu einer Gasdurchmischung in dem Apparat kommen, was die Trennwirkung verringern kann. Der Apparat ist stets auf ein- und derselben Temperatur.

GB 1 008 475 A und US 2 780 526 A offenbaren jeweils eine Vorrichtung und ein Verfahren, bei welcher ein Gasstrom, der verschiedene Wasserstoffisotope beinhaltet, in eine Trenneinrichtung eingeleitet wird. In den Trennsäulen wird jeweils ein partikelförmiges Sorbens von oben nach unten bewegt, wobei das Sorbens mit dem Gasstrom in Kontakt gebracht wird. Hierbei ist jeweils ein Temperaturgradient eingerichtet, wobei je nach Temperatur eine Absorption und/oder eine Desorption stattfindet. Die hierdurch angereicherten oder abgereicherten Gasströme werden an verschiedenen Stellen aus der jeweiligen Vorrichtung herausgeführt.

### Aufgabe der Erfindung

Ausgehend hiervon, besteht die Aufgabe der vorliegenden Erfindung darin, ein Verfahren und eine Vorrichtung zur Anreicherung oder Abreicherung mindestens eines Wasserstoffisotops in einem Gasstrom bereitzustellen, welche die bekannten Nachteile und Einschränkungen des Standes der Technik zumindest teilweise überwinden.

Das Verfahren und die Vorrichtung sollen insbesondere eine Isotopentrennung von Wasserstoffisotopen und/oder eine Abtrennung von Wasserstoff aus einem Inertgasstrom, insbesondere Helium, auf einfache und effiziente Weise ermöglichen. Insbesondere sollen das Verfahren und die Vorrichtung eine kontinuierliche Betriebsweise, eine geringe Verfahrensdauer, eine gute Trennwirkung, eine geringe Baugröße und somit ein geringes Inventar an Wasserstoff sowie eine einfache und kostengünstige Skalierung zu größeren Reinheiten der Wasserstoffisotope und/oder zu höheren Durchsätzen erlauben.

### Offenbarung der Erfindung

Diese Aufgabe wird durch ein Verfahren und eine Vorrichtung zur Anreicherung oder Abreicherung mindestens eines Wasserstoffisotops in einem Gasstrom gemäß den Merkmalen der unabhängigen Ansprüche gelöst. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne dass hierdurch die Möglichkeit eingeschränkt wird, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten unangetastet bleiben, die hierdurch eingeleiteten Merkmale mit anderen Merkmalen zu kombinieren, seien es optionale oder nicht-optionale Merkmale.

In einem ersten Aspekt betrifft die vorliegende Erfindung ein Verfahren zur Anreicherung oder Abreicherung mindestens eines Wasserstoffisotops in einem Gasstrom. Das vorliegende Verfahren umfasst die im Folgenden im Einzelnen beschriebenen Schritte a) bis c), wobei alle Schritte a) bis c) vorzugsweise gleichzeitig durchgeführt werden können. Die einzelnen Schritte des vorliegenden Verfahrens sind:
a) Bereitstellen eines Gasstroms, welcher als gasförmige Bestandteile mindestens zwei verschiedene Wasserstoffisotope oder mindestens eines der Wasserstoffisotope und ein Inertgas aufweist;
b) Bereitstellen eines bewegten Feststoffs, welcher mindestens ein Sorbens umfasst, wobei das Sorbens derart ausgewählt wird, dass sich die gasförmigen Bestandteile des Gasstroms in einem Ausmaß an Absorption an dem Sorbens voneinander unterscheiden; und
c) Alternierendes Inkontaktbringen des bewegten Feststoffs und des Gasstroms
   i) bei mindestens einer ersten Temperatur, bei welcher die Absorption der gasförmigen Bestandteile des Gasstroms an dem Sorbens erfolgt, in mindestens einem ersten Bereich, und
   ii) bei mindestens zwei zweiten, gegenüber der ersten Temperatur und voneinander verschiedenen Temperaturen, bei welcher jeweils eine Desorption eines der Wasserstoffisotope aus den gasförmigen Bestandteilen des Gasstroms von dem Sorbens erfolgt, in mindestens einem zweiten Bereich, wobei der mindestens eine erste Bereich auf der ersten Temperatur und der mindestens eine zweite Bereich auf den zwei zweiten, voneinander verschiedenen Temperaturen gehalten werden; bis ein gewünschter Grad an Anreicherung oder Abreicherung mindestens eines der Wasserstoffisotope erreicht wird.

Gemäß Schritt a) wird ein Gasstrom bereitgestellt, welcher als gasförmige Bestandteile mindestens zwei verschiedene Wasserstoffisotope oder mindestens eines der Wasserstoffisotope und ein Inertgas aufweist. Der Begriff des "Gasstroms" bezieht sich hierbei auf ein bewegtes Gasvolumen, welches mindestens zwei verschiedene Wasserstoffisotope in einem Wasserstoffstrom oder mindestens ein Wasserstoffisotop und ein Inertgas als gasförmige Bestandteile aufweist. Hierbei bezeichnet der Begriff des "Inertgases" einen Bestandteil des Gasstroms, welcher zusammen mit den übrigen Bestandteilen des Gasstroms bewegt wird, jedoch mit diesen keine chemische Wechselwirkung eingeht. Als Inertgas eignet sich insbesondere Helium; andere Inertgase wie z.B. andere Edelgase oder Stickstoff sind ebenfalls denkbar.

Der Begriff des "Wasserstoffisotops" oder "Isotops" betrifft eine von drei möglichen Spezies des Wasserstoffs, welche in ihrem Kern jeweils über ein Proton verfügen, sich jedoch durch eine verschiedene Anzahl von Neutronen voneinander unterscheiden, und die als "Protium", "Deuterium" und "Tritium" bezeichnet werden. Während Protium (¹H oder H) lediglich ein Proton im Kern aufweist, verfügen Deuterium (²D oder D) und Tritium (³T oder T) über ein Neutronen bzw. zwei Neutronen. Da sich die Masse des Proton und des Neutrons nur geringfügig voneinander unterscheiden, geben die hochgestellten Zahlen die jeweils zugehörige relative Masse an. Auf der Erdoberfläche weisen die stabilen Isotope Protium und Deuterium eine relative Häufigkeit von 99,98 % bzw. von 0,015 % auf, während Tritium mit einer Halbwertszeit von 12,32 Jahren radioaktiv ist, jedoch durch natürliche oder künstliche Vorgänge gebildet werden kann und entsprechend diesen Vorgängen in einer relativen Häufigkeit vorliegen kann. Darüber hinaus existieren weitere, kurzlebige Wasserstoffisotope, für die sich vorliegende Erfindung grundsätzlich ebenfalls eignen kann, die jedoch für die weitere Darstellung außer Betracht bleiben sollen.

Der Begriff der "Anrcicherung" bezeichnet in der Verfahrenstechnik einen Prozcss, der dazu eingerichtet ist, um die relative Häufigkeit eines Bestandteils des Gasstroms zu erhöhen. In analoger Weise bezeichnet der Begriff der "Abreicherung" einen Prozess, der dazu eingerichtet ist, um die relative Häufigkeit eines Bestandteils des Gasstroms, insbesondere von Protium oder Helium, zu verringern. Der Begriff der "Abtrennung" bezeichnet in der Verfahrenstechnik einen Prozess, bei welchem mindestens ein Bestandteil eines Gasstroms von den übrigen Bestandteilen des Gasstroms zu einem möglichen oder gewünschten Grad entfernt wird. Der Begriff "Grad" bezeichnet hierbei einen Bruchteil, insbesondere einen Prozentsatz, welcher eine relative Häufigkeit des betreffenden Gasbestandteils angibt. Da abgesehen von Protium die relative Häufigkeit der übrigen Isotope sehr gering ist, ist hierzu in der Regel die vorherige Anreicherung des gewünschten abzutrennenden Isotops und/oder die vorherige Anreicherung der häufigen Isotope, insbesondere von Protium, erforderlich.

Wie eingangs erwähnt, kann eine derartige Anreicherung oder Abreicherung und damit eine Trennung der verschiedenen Isotope des Wasserstoffs dadurch erzielt werden, indem geringfügige Unterschiede der Isotope in chemischer und/oder physikalischer Hinsicht in eine unterschiedliche Mobilität der verschiedenen Isotope umgesetzt werden. In vorteilhafter Weise können die verschiedenen Isotope unterschiedlich schnell eine Membran durchdringen oder unterschiedliche Siedepunkte aufweisen, was dazu eingesetzt werden kann um eine Abtrennung in einem permeatorischen Verfahren bzw. während einer kryogenen Destillation zu erzielen.

Für die vorliegende Erfindung wird jedoch ein unterschiedliches Verhalten der verschiedenen Wasserstoffisotope in Bezug auf mindestens eine den Gasstrom umgebende Oberfläche zur Abtrennung der einzelnen Isotope ausgenutzt. Hierbei bezeichnet der Begriff der "Absorption" eine Aufnahme des Isotops durch die den Gasstrom umgebende Oberfläche. Alternativ oder zusätzlich zur Absorption, kann auch eine "Adsorption" des Isotops an einer den Gasstrom umgebende Oberfläche auftreten. Insbesondere da eine Unterscheidung der im Einzelnen auftretenden Vorgänge bei der Beaufschlagung der Oberfläche durch den Gasstrom in aller Regel nur unter hohem Aufwand aufzuklären ist und es darüber hinaus für die Funktionsweise der vorliegenden Erfindung unerheblich ist, ob das mindestens eine Isotop an der den Gasstrom umgebenden Oberfläche absorbiert oder adsorbiert werden kann, umfasst der Begriff der "Absorption" im Folgenden auch eine mögliche Adsorption des Isotops an der den Gasstrom umgebenden Oberfläche. Aufgrund eines unterschiedlichen Absorptionsgrads der verschiedenen Isotope an der den Gasstrom umgebenden Oberfläche kann somit eine Abtrennung eines oder mehrerer Wasserstoffisotope aus dem Gasstrom erzielt werden.

Gemäß Schritt b) wird weiterhin ein Feststoff bereitgestellt, welcher mindestens ein Sorbens umfasst. Der Begriff des "Feststoffs" bezieht sich hierbei auf eine Substanz, welche in einem festen Aggregatzustand vorliegt und welche die von dem Gasstrom zu beaufschlagende Oberfläche bereitstellt. Damit diese Oberfläche des Festkörpers eine möglichst große Fläche aufweisen kann, kann der Festkörper hierzu vorzugsweise in Form von Partikeln, welche insbesondere als Pulver, Kugeln oder Pellets vorliegen können, bereitgestellt werden, wobei die Partikel das Sorbens umfassen. Der Begriff der "Partikel" bezeichnet hierbei grundsätzlich eine Form des Festkörpers, welcher als eine Vielzahl von voneinander gesondert vorhandenen Einheiten vorliegt. Um ein übermäßiges Zerkleinern der Partikel zu verhindern, können die Partikeln aufgeheizt werden, um damit sehr kleine Partikel wieder aufschmelzen und auf diese Weise ein Wachstum der Partikel herbeizuführen.

In einer alternativen Ausgestaltung kann der Festkörper in Form eines mit dem Sorbens beschichteten Trägermaterials vorliegen. Als Trägermaterial kann sich beispielsweise Kieselgur eignen; andere Trägermaterialien sind jedoch möglich, Weitere Formen des Festkörpers, welche über eine möglichst große Oberfläche verfügen, sind ebenfalls denkbar.

Der Begriff des "Sorbens" bezeichnet eine Substanz, an welcher sich die gewünschten Bestandteile aus dem Gasstrom bevorzugt anlagern können. Gemäß dem vorliegenden Verfahren wird hierbei das Sorbens derart ausgewählt, dass sich die gasförmigen Bestandteile des Gasstroms, insbesondere die verschiedenen Wasserstoffisotope, in einem Ausmaß an Absorption an dem Sorbens voneinander unterscheiden. Auf diese Weise lassen sich einzelne oder mehrere Wasserstoffisotope aus dem Gasstrom entfernen. Alternativ oder zusätzlich kann so Wasserstoff von dem Trägergas abgetrennt werden.

In einer besonders bevorzugten Ausgestaltung kann das Sorbens eine metallische Substanz umfassen, welche in die Partikel eingebracht sein können, mit welcher die Partikel beschichtet sein können oder aus welcher die Partikel bestehen. Alternativ kann die metallische Substanz in Form einer Beschichtung auf das Trägermaterial aufgetragen sein. Hierbei kann die metallische Substanz bevorzugt die chemischen Elemente Palladium, Vanadium oder Titan umfassen. Diese chemischen Elemente sind dafür bekannt, dass sich verschiedene Wasserstoffisotope in einem Ausmaß an Absorption an dem Sorbens voneinander unterscheiden. Wie in L.K. Heung et al. ausgeführt, absorbiert beispielsweise Palladium bei niedrigeren Temperaturen Tritium besser als Deuterium und Deuterium besser als Protium, während bei höheren Temperaturen Tritium besser als Deuterium und Deuterium besser als Protium desorbiert wird.

Somit kann das Ausmaß an Absorption an dem Sorbens im Allgemeinen durch Verändern einer Temperatur und/oder eines Druckes des Gasstroms und/oder der damit zu beaufschlagende Oberfläche eingestellt werden. Wie ebenfalls in L.K. Heung et al. erwähnt, verringert sich das Ausmaß an Absorption im Allgemeinen mit einer Zunahme der Temperatur, so dass bei höheren Temperaturen eine "Desorption", d.h. eine Abgabe des Isotops von der damit beaufschlagten Oberfläche an einen die Oberfläche umgebenden Gasstrom, erfolgen kann. In diesem Zusammenhang wird darauf hingewiesen, dass sich bei jeder Temperatur und bei jedem angelegten Druck ein Gleichgewicht von Absorptions- und von Desorptionsprozessen ausbilden kann, welche sich jedoch, abgesehen von einem Gleichgewichtspunkt, an welchem Absorption und Desorption in gleichem Ausmaß ablaufen, durch ein überwiegendes Maß an Absorption oder Desorption beschreiben lassen.

Gemäß dem vorliegenden Verfahren erfolgt während Schritt c) somit ein alternierendes Inkontaktbringen des Feststoffs und des Gasstroms bei mindestens einer ersten Temperatur, bei welcher die Absorption der gasförmigen Bestandteile des Gasstroms an dem Sorbens erfolgt, und bei mindestens zwei zweiten Temperaturen, welche sowohl von der ersten Temperatur als auch voneinander verschiedenen sind, bei welcher jeweils eine Desorption eines der Wasserstoffisotope aus den gasförmigen Bestandteilen des Gasstroms von dem Sorbens erfolgt. Vor oben dargelegten Hintergrund kann die erste Temperatur auch als Temperatur bezeichnet werden, bei welcher die Absorption der Isotope an dem Sorbens die Desorption der Isotope von dem Sorbens übersteigt. In analoger Weise kann jede der zweiten Temperaturen auch als Temperatur bezeichnet werden, bei welcher die Desorption eines der Wasserstoffisotope an dem Sorbens die Absorption des betreffenden Wasserstoffisotops von dem Sorbens übersteigt. In einer besonders bevorzugten Ausgestaltung kann jeder der zweiten Temperaturen höher als die erste Temperatur gewählt werden. Insbesondere kann hierbei die erste Temperatur in einem ersten Temperaturbereich von 77 K bis 298 K, bevorzugt von 250 K bis 300 K und jede der zweiten Temperaturen in einem zweiten Temperaturbereich von 298 K bis 1000 K, bevorzugt von 400 K bis 500 K, jedoch voneinander verschieden gewählt werden. In den besonders bevorzugten Temperaturbereichen kann sich insbesondere ein bevorzugtes Verhältnis von erwartetem Nutzen zu erforderlichem Aufwand ergeben.

Gemäß Schritt c) des vorliegenden Verfahrens erfolgt das Inkontaktbringen des Gasstroms, der wie oben dargelegt, ein bewegtes Gasvolumen darstellt, mit einem bewegten Feststoff. Hierbei bezeichnet der Begriff "bewegt" im Hinblick auf den Feststoff, dass dieser, unabhängig von der Bewegung des Gasstroms, selbst einer Bewegung unterworfen ist. In einer besonders bevorzugten Ausgestaltung kann hierbei die Bewegung des Festkörpers in gegenläufiger Weise zu dem Fluss des Gasstroms erfolgen. Die Begriffe "Inkontaktbringen" oder "Inkontakttreten" beschreiben hierbei ein Aufeinandertreffen der, vorzugsweise gegenläufig zueinander, bewegten Phasen, d.h. des Festkörpers und des Gasstroms. Das Aufeinandertreffen kann hierbei derart erfolgen, dass die sich in dem Gasstrom befindlichen Isotope, je nach ausgewählter Temperatur des Bereichs, in dem das Aufeinandertreffen stattfindet, bevorzugt auf der von dem Festkörper bereitgestellten Oberfläche absorbiert oder desorbiert werden.

Wie unten näher erläutert, kann die Bewegung des Feststoffs auf unterschiedliche Weise erfolgen. In einer besonders bevorzugten Ausgestaltung kann hierzu der das Sorbens umfassende Feststoff, vorzugsweise von oben, in einen Behälter, insbesondere in eine Kolonne, eingeführt werden, während der Gasstrom demselben Behälter, insbesondere der Kolonne, vorzugsweise von unten, zugeführt werden kann, um auf diese Weise eine gegenläufige Bewegung des Festkörpers, dessen Bewegung insbesondere von seiner Gewichtskraft und/oder einer für diesen Zweck vorgesehenen beweglichen Unterlage, angetrieben werden kann, und des Gasstroms, der sich von unten nach oben, insbesondere entlang eines Temperatur- und/oder Druckgradienten, ausbreiten kann, erzeugen zu können. In dieser Ausgestaltung können darüber hinaus, vorzugsweise vertikal übereinander angeordnet, mindestens zwei unterschiedliche Bereiche vorgesehen sein, wobei mindestens ein erster Bereich auf der ersten Temperatur und mindestens ein zweiter Bereich auf zwei zweiten, voneinander verschiedenen Temperaturen gehalten werden können. Auf diese Weise kann somit das Inkontaktbringen des bewegten Feststoffs und des Gasstroms gemäß Schritt c) alternierend bei der ersten Temperatur und bei zwei zweiten, , voneinander verschiedenen Temperaturen erfolgen.

In einer alternativen Ausgestaltung kann eine drehbar gelagerte Unterlage zur Aufnahme des das Sorbens umfassenden Festkörpers vorgesehen sein, wobei der eine Bereich der Unterlage auf der ersten Temperatur und der zweite Bereich der Unterlage auf zwei zweiten, voneinander verschiedenen Temperaturen gehalten werden können. Durch Drehen der Unterlage wird der Festkörper alternierend durch die unterschiedlich temperierten Bereiche bewegt und kann hierbei jeweils von dem Gasstrom überstrichen und damit beaufschlagt werden. Für weitere Einzelheiten wird auf das unten stehende Ausführungsbeispiel zu dieser Ausgestaltung verwiesen. Darüber hinaus sind weitere Ausgestaltungen denkbar.

Der Begriff "alternierend" bezeichnet eine Ausführung des vorliegenden Verfahrens, bei welcher das Inkontaktbringen des bewegten Feststoffs und des Gasstroms abwechselnd in den unterschiedlich temperierten Bereichen erfolgt, wobei nicht ausgeschlossen ist, dass der erste Bereich und/oder der zweite Bereich mehrteilig ausgestaltet sein könne, so dass das Inkontaktbringen innerhalb des ersten Bereichs und/oder des zweiten Bereichs, bei derselben Temperatur oder bei unterschiedlichen Temperaturen innerhalb des zugehörigen Temperaturbereichs, mehrfach erfolgen kann, bevor das nächste das Inkontakttreten in einem anders temperierten Bereich erfolgt. Beispielsweise können der bewegte Feststoff und der Gasstrom zunächst einmal bei einer ersten Temperatur in Kontakt treten, um danach zweimal hintereinander bei jeweils einer zweiten Temperatur, welche jeweils einen aus dem zweiten Temperaturbereich gewählten, verschiedenen Wert annehmen, in Kontakt zu treten. Derartige Ausgestaltungen können sich insbesondere dazu eignen, um eine höhere Anreicherung des gewünschten Wasserstoffisotops erzielen zu können. Weitere Ausgestaltungen sind möglich.

In einer besonders bevorzugten Ausgestaltung kann hierzu das alternierende Inkontaktbringen des bewegten Feststoffs und des Gasstroms in einer Kaskade in mindestens zwei aufeinanderfolgend angeordneten Trennstufen erfolgen, um auf diese Weise eine höhere Anreicherung oder Abreicherung des gewünschten Wasserstoffisotops erzielen zu können. In einer besonderen Ausgestaltung kann hierbei zwischen zwei benachbarten Trennstufen eine Schleuse vorgesehen werden, welche dazu eingerichtet sein kann, um zu verhindern, ein zu hoher Austausch an gasförmiger Phase zwischen benachbarten Trennstufen erfolgen und so die Trennwirkung verringern könnte.

Das alternierende Inkontaktbringen des bewegten Feststoffs und des Gasstroms gemäß Schritt c) wird hierbei solange durchgeführt, bis ein gewünschter Grad an Anreicherung mindestens eines der Wasserstoffisotope erreicht wird.

Hieran anschließend kann, insbesondere sobald der gewünschte Grad an Anreicherung mindestens eines der Wasserstoffisotope erreicht ist und danach vorzugsweise gleichzeitig in kontinuierlicher Weise, ein gewünschtes Abtrennen des mindestens einen Wasserstoffisotops aus dem Gasstrom gemäß einem zusätzlichen Schritt d) erfolgen. Hierbei kann es besonders bevorzugt sein kann, Schritt d) erst dann auszuführen, wenn gemäß Schritt c) ein gewünschter Grad an Anreicherung mindestens eines der Wasserstoffisotope erreicht ist.

In einem weiteren Aspekt betrifft die vorliegende Erfindung eine Vorrichtung zur Anreicherung oder Abreicherung mindestens eines Wasserstoffisotops in einem Gasstrom. Die Vorrichtung umfasst hierbei
- mindestens eine Einrichtung, welche zur Bereitstellung eines Gasstroms, umfassend als gasförmige Bestandteile mindestens zwei verschiedene Wasserstoffisotope oder mindestens eines der Wasserstoffisotope und ein Inertgas, eingerichtet ist;
- mindestens eine Einheit zur Aufnahme und Bewegung eines Feststoffs, welcher mindestens ein Sorbens umfasst, wobei die gasförmigen Bestandteile des Gasstroms durch einen Grad an Absorption an dem Sorbens voneinander unterscheidbar sind; und
- mindestens drei gesonderte Temperiereinrichtungen zur Bereitstellung mindestens eines ersten Bereichs, welcher auf einer ersten Temperatur haltbar ist, und mindestens eines zweiten Bereichs, welcher auf zwei zweiten, gegenüber der ersten Temperatur und voneinander verschiedenen Temperaturen haltbar ist,
wobei der Gasstrom und der Feststoff alternierend durch den mindestens einen ersten Bereich und durch den mindestens einen zweiten Bereich führbar sind. Die erfindungsgemäße Vorrichtung ist somit zur Anreicherung oder Abreicherung mindestens eines Wasserstoffisotops in einem Gasstrom eingerichtet und kann weiterhin auch zur Abtrennung mindestens eines Wasserstoffisotops aus dem Gasstrom eingesetzt werden.

Die vorgeschlagene Vorrichtung umfasst mindestens eine Einrichtung, welche zur Bereitstellung eines Gasstroms eingerichtet ist, der mindestens zwei verschiedene Wasserstoffisotope oder mindestens eines der Wasserstoffisotope und ein Inertgas als gasförmige Bestandteile aufweist. Hierfür kann grundsätzlich eine beliebige Gaszufuhr dienen, welche für diesen Zweck geeignet ist.

Die vorgeschlagene Vorrichtung umfasst weiterhin mindestens eine Einheit zur Aufnahme und Bewegung eines Feststoffs, welcher mindestens ein Sorbens umfasst, wobei die gasförmigen Bestandteile des Gasstroms durch einen Grad an Absorption an dem Sorbens voneinander unterscheidbar sind. Das Sorbens kann hierzu bevorzugt eine metallische Substanz, insbesondere Palladium, Vanadium oder Titan, umfassen. Wie bereits erwähnt, kann hierbei das Sorbens in einer Form von Partikeln, welche die metallische Substanz umfassen, oder als mit der metallischen Substanz beschichtetes Trägermaterial, vorliegen.

Die vorgeschlagene Vorrichtung umfasst weiterhin mindestens drei gesonderte Temperiereinrichtungen zur Bereitstellung des mindestens einen ersten Bereichs, welcher auf der ersten Temperatur haltbar ist, und des mindestens einen zweiten Bereichs, welcher auf den zwei zweiten Temperaturen, welche voneinander verscheiden und bevorzugt höher sind als die erste Temperatur, haltbar ist. Der Begriff der "Temperiereinrichtung" umfasst hierbei eine Heizeinrichtung zur Erhöhung einer in dem betreffenden Bereich vorhandenen mindestens einen Temperatur oder eine Kühleinrichtung zur Verringerung Erhöhung einer in dem betreffenden Bereich vorhandenen mindestens einen Temperatur. Als Heizeinrichtungen können bevorzugt externe Wärmequellen in Form einer Kontaktheizung, einer Strahlungsheizung und/oder einer Induktionsheizung dienen, welche in Form eines Heizmantels vorliegen können. Alternative Ausgestaltungen sind möglich, insbesondere eine Heizung des Sorbens und/oder des Gasstroms mittels Wärmeübertragung durch Einsatz eines Wärmeträgermediums. Als Kühleinrichtung kann insbesondere ein Kühlrohr oder ein Kühlmantel dienen, die mit Kühlwasser gefüllt sein können. Andere Ausgestaltungen sind jedoch auch hier möglich.

Die vorgeschlagene Vorrichtung ist darüber hinaus derart ausgestaltet, dass der Gasstrom und der Feststoff alternierend durch den mindestens einen ersten Bereich und durch den mindestens einen zweiten Bereich führbar sind. Wie unten näher erläutert, kann diese Art der Ausgestaltung der Vorrichtung auf unterschiedliche Weise erfolgen.

In einer besonders bevorzugten Ausgestaltung können hierzu der mindestens eine erste Bereich und der mindestens eine zweite Bereich eine Trennstufe ausbilden, wobei eine Kaskade aus mindestens zwei aufeinanderfolgend angeordneten Trennstufen vorgesehen ist. Der Begriff der "Kaskade" beschreibt hierbei eine Gesamtheit von aufeinanderfolgend angeordneten Trennstufen. Der Begriff der "Trennstufe" bezeichnet hierbei eine Einrichtung, welche sowohl mindestens eine Absorptionsstufe als auch mindestens eine Desorptionsstufe umfasst. Hierbei bezeichnet die "Absorptionsstufe" eine Einheit, in welcher eine Absorption der gewünschten gasförmigen Bestandteile an dem Sorbens stattfinden kann, und die "Desorptionsstufe" eine Einheit, in welcher eine Desorption der gewünschten gasförmigen Bestandteile aus dem Sorbens erfolgen kann. Vorzugsweise können hierbei der erste Bereich in Form einer Absorptionsstufe zur Absorption der gasförmigen Bestandteile an dem Sorbens und der zweite Bereich in Form von zwei Desorptionsstufen zur jeweiligen Desorption eines der Wasserstoffisotope aus den gasförmigen Bestandteilen von dem Sorbens ausgestaltet sein. In der besonders bevorzugten Ausgestaltung, können somit innerhalb jeder Trennstufe eine Absorptionsstufe und mindestens zwei Desorptionsstufen vorgesehen sein.

In einer alternativen Ausgestaltung kann die Einheit zur Aufnahme und Bewegung des Feststoffs dazu eingerichtet sein, um alternierend den ersten Bereich und den zweiten Bereich zu durchqueren, um so sicherzustellen, dass der Gasstrom und der Feststoff alternierend durch den mindestens einen ersten Bereich und durch den mindestens einen zweiten Bereich führbar sind. Hierzu kann die Einheit zur Aufnahme und Bewegung des Feststoffs als bewegliche Unterlage, insbesondere in Form eines Wanderbetts, oder als drehbar gelagerte Unterlage, insbesondere in Form einer oder mehrerer rotierender Scheiben, ausgestaltet sein. Weitere Ausgestaltungen sind denkbar.

Für weitere Einzelheiten in Bezug auf die vorliegende Vorrichtung wird auf die Beschreibung des erfindungsgemäßen Verfahrens verwiesen.

Das vorliegende Verfahren und die beschriebene Vorrichtung eignen sich insbesondere zur Abtrennung mindestens eines Wasserstoffisotops aus einem Gasstrom, bevorzugt nach einer zuvor erfolgten Anreicherung oder Abreicherung des mindestens einen Wasserstoffisotops in dem Gasstrom. Das Verfahren und die Vorrichtung lasen sich vorzugsweise wie folgt einsetzen:
- zur Deuteriumabtrennung bei der Wasserstoffverflüssigung oder -reinigung, vor allem in der Gasversorgung, der Halbleiterindustrie oder in Fusionsanlagen;
- zur Isotopentrennung für kerntechnische Anlagen, insbesondere zur Abtrennung von Tritium aus dem Kühlkreislauf von Fusionsanlagen oder aus der Abluft von Tritiumanlagen in Kernkraftwerken und/oder Forschungsreaktoren;
- zur Abtrennung von Wasserstoff aus Inertgasen, insbesondere aus inertisierten Handschuhboxen in Produktionsanlagen, z.B. in der Batteriezellen-Herstellung.

Andere Verwendungen des vorliegenden Verfahrens und der vorgeschlagenen Vorrichtung sind jedoch denkbar.

### Vorteile der Erfindung

Das vorliegende Verfahren und die vorgeschlagene Vorrichtung weist eine Reihe von Vorteilen gegenüber aus dem Stand der Technik bekannten Verfahren und Vorrichtungen auf.

Ein Hauptvorteil des Verfahrens gegenüber bekannten chromatografischen, destillativen oder membrangebundenen Verfahren besteht darin, dass in jeder Trennstufe das Wasserstoffinventar geringer ist, da dieses stets als Gas (und nicht flüssig wie bei einer Destillation) und bei relativ moderaten Drücken, d.h. von einem Vakuum bis zu leichtem Überdruck (und nicht wie bei hohen Drücken in membrangebundenen Verfahren) vorliegt. Außerdem können geringe Verfahrensdauern, ein kontinuierlicher Betrieb und eine einfache Skalierbarkeit (im Gegensatz zu chromatografischen Verfahren einschließlich des TCAP-Verfahrens) für eine geringe Baugröße der Vorrichtung sorgen, welche wiederum nur ein geringes Wasserstoffinventar für den Betrieb benötigt. Damit lassen sich vergleichsweise kleine und damit kostengünstigere Anlagen realisieren. Außerdem können durch eine bevorzugte Kombination aus Sorbensmaterial, Druck und Temperatur des Gases hohe Trennfaktoren erzielt werden, so dass eine geringere Anzahl an Trennstufen ausreichen kann. Eine Kaskadierung der Trennstufen kann zudem eine einfache und kostengünstige Skalierung zu den gewünschten Isotopenreinheiten und/oder Durchsätzen ermöglichen. Dadurch können sich erhebliche wirtschaftliche und sicherheitstechnische Vorteile ergeben, insbesondere im Bereich des Brennstoffkreislaufs bei der Kernfusion.

Die Vorteile des vorliegende Verfahrens und der vorgeschlagene Vorrichtung ergeben sich insbesondere durch die Bewegung des das Sorbens umfassenden Festkörpers. Die Verwendung des bewegten Sorbens ermöglicht eine kontinuierliche Betriebsweise des vorliegenden Isotopentrennprozesses im Unterschied zu bekannten auf Basis eines Sorbens durchführbaren Isotopentrennprozessen, welche stets diskontinuierliche oder halbkontinuierliche Verfahren darstellen.

### Kurze Beschreibung der Figuren

Weitere Einzelheiten und Merkmale der vorliegenden Erfindung ergeben sich aus der nachfolgenden Beschreibung von bevorzugten Ausführungsbeispielen, insbesondere in Verbindung mit den abhängigen Ansprüchen. Hierbei können die jeweiligen Merkmale für sich alleine oder zu mehreren in Kombination miteinander verwirklicht sein. Die Erfindung ist jedoch nicht auf die Ausführungsbeispiele beschränkt. Die Ausführungsbeispiele sind schematisch in den nachfolgenden Figuren dargestellt. Hierbei bezeichnen gleiche Bezugsziffern in den Figuren gleiche oder funktionsgleiche Elemente bzw. hinsichtlich ihrer Funktionen einander entsprechende Elemente. Im Einzelnen zeigen:
- Figur 1: eine schematische Darstellung einer bevorzugten Ausführungsform einer erfindungsgemäßen Vorrichtung zur Anreicherung oder Abreicherung mindestens eines Wasserstoffisotops in einem Gasstrom, umfassend eine Mehrzahl von Trennstufen;
- Figur 2: eine Darstellung einer bevorzugten Ausführung einer Trennstufe, umfassend eine Absorptionsstufe und zwei Desoprtionsstufen;
- Figur 3: eine Darstellung einer bevorzugten Ausführung einer Desoprtionsstufe;
- Figur 4: eine Darstellung einer bevorzugten Ausführung einer Absorptionsstufe; und
- Figur 5: eine schematische Darstellung einer weiteren bevorzugten Ausführungsform der erfindungsgemäßen Vorrichtung, umfassend mindestens eine rotierende Scheibe.

### Beschreibung der Ausführungsbeispiele

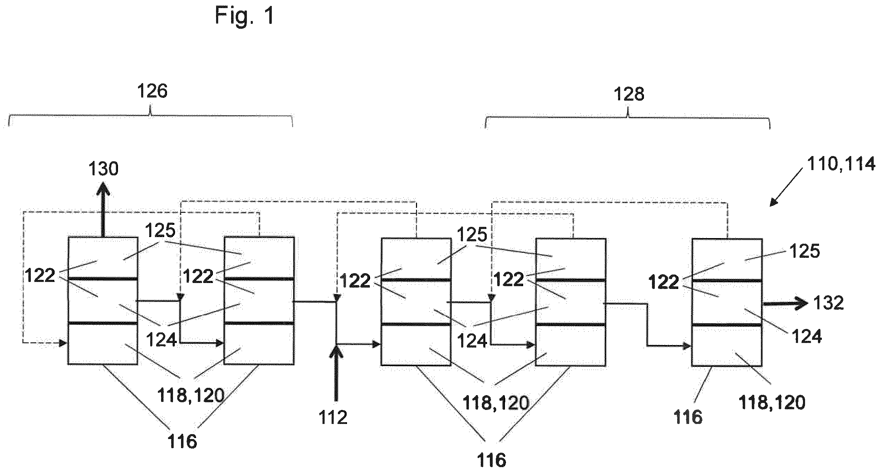

Figur 1 zeigt eine schematische Darstellung einer bevorzugten Ausführungsform einer erfindungsgemäßen Vorrichtung 110 zur Anreicherung oder Abreicherung mindestens eines Wasserstoffisotops in einem Gasstrom, welche auch als "Feed" bezeichnet werden kann. Der Gasstrom umfasst hierbei ein bewegtes Gasvolumen, welches mindestens zwei verschiedene Wasserstoffisotope in einem Wasserstoffstrom oder mindestens ein Wasserstoffisotop und ein Inertgas, insbesondere Helium, als gasförmige Bestandteile aufweist. Das Bezugszeichen 112 bezeichnet hierbei insbesondere eine Zuführung des Gasstroms.

Die in Figur 1 schematisch dargestellte Vorrichtung 110 umfasst eine Kaskade 114 aus mindestens fünf aufeinanderfolgend angeordneten Trennstufen 116. Eine andere Anzahl von Trennstufen 116 ist jedoch möglich. Jeder der Trennstufen 116 umfasst einen ersten Bereich 118 jeweils in Form einer Absorptionsstufe 120, welche zu einer Absorption der Wasserstoffisotope an einem Sorbens (nicht dargestellt) eingerichtet ist. Weiterhin umfasst jede der Trennstufen 116 einen zweiten Bereich 122 jeweils in Form von zwei Desorptionsstufen 124, 125, welche jeweils zu einer Desorption eines der WasserstoffIsotope von dem Sorbens eingerichtet ist. Als Sorbens kann hier vorzugsweise eine metallische Substanz, insbesondere Palladium, Vanadium oder Titan, dienen, welche, gegebenenfalls mit zusätzlichen Substanzen versehen, in Form von Partikeln, vorzugsweise als Pulver, aber auch als Kugeln oder als Pellets, vorliegen kann. Wie oben dargestellt, wird bei niedrigeren Temperaturen Tritium besser als Deuterium und Deuterium besser als Protium an Palladium absorbiert, während bei höheren Temperaturen Tritium besser als Deuterium und Deuterium besser als Protium von Palladium desorbiert wird. In der in Figur 1 dargestellten Vorrichtung 110 sind innerhalb jeder Trennstufe 116 eine Absorptionsstufe 120 und zwei Desorptionsstufen 124, 125 vorgesehen.

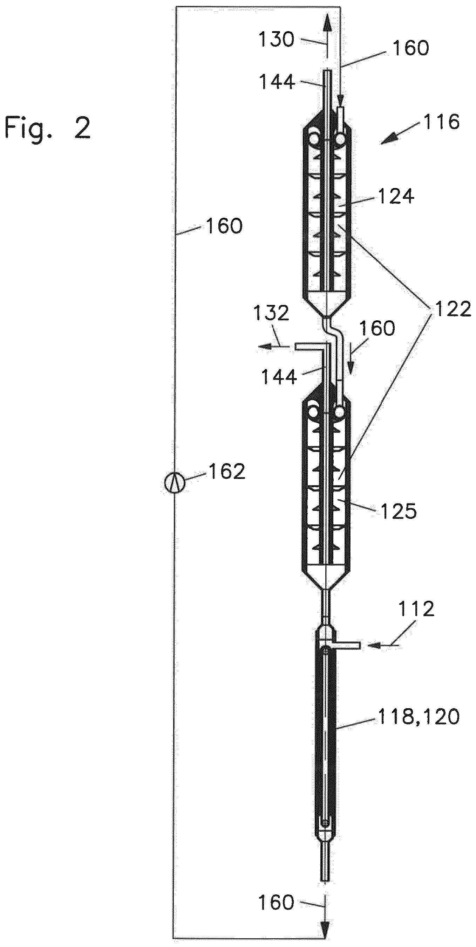

In jeder der Trennstufen 116 kann folglich eine Anreicherung 126 oder eine Abreicherung (Stripping) 128 eines der Wasserstoffisotope erfolgen. Hierzu werden entsprechend den dargestellten Pfeilen aus den jeweiligen Desorptionsstufen 124, 125 jeder der Trennstufen 116 Gas entnommen und der Absorptionsstufe 120 einer benachbart angeordneten Trennstufe 116 zugeführt. Andere Arten der Verfahrensführung sind jedoch möglich. Als Verfahrensprodukte können der Vorrichtung 110 somit ein angereichertes Produkt 130, welches insbesondere mit Tritium angereichert ist, oder ein abgereichertes Produkt 132, insbesondere an Tritium, entnommen und somit aus dem Gasstrom abgetrennt werden. Figur 2 zeigt eine Darstellung einer bevorzugten Ausführung einer Trennstufe 116, welche in dem vorgestellten Ausführungsbeispiel genau eine Absorptionsstufe 120 und genau zwei Desoprtionsstufen 124, 125 aufweist, die auf in die in Figur 2 dargestellte Art in zueinander vertikaler Weise angeordnet sind. Andere Ausführungen sind möglich, insbesondere eine höhere Anzahl an Desoprtionsstufen 124, 125. Die Zuführung 112 für dem Gasstrom kann für die in Figur 2 dargestellte Trennstufe 116 jeweils seitlich erfolgen, während das Sorbens (nicht dargestellt) über eine Zuführung 160 derart in die Trennstufe 116 eingebracht werden kann, dass es die Trennstufe 116 von oben nach unten durchlaufen kann, wobei es in der Absorptionsstufe 120 und in jeder der Desoprtionsstufen 124, 125 jeweils auf eine unterschiedliche Temperatur gebracht werden kann. Beispielsweise kann die zweite Temperatur in der Desoprtionsstufe 124 geringer sein als in der Desoprtionsstufe 125. Dies erfolgt vorzugsweise durch eine externe Wärmequelle (nicht dargestellt), insbesondere eine Kontaktheizung, eine Strahlungsheizung und/oder eine Induktionsheizung; in dem hier vorgestellten Ausführungsbeispiel durch ein Wärmeträgermedium. Aufgrund der Anordnung der Absorptionsstufe 120 und der Desoprtionsstufen 124, 125 in der beispielhaften Trennstufe 116 gemäß Figur 2 können die ersten Bereiche 118 und die zweiten Bereiche 122 geschaffen werden, in welchen der Gasstrom und das Sorbens in Kontakt treten, um Absorption oder Desorption des mindestens einen gewünschten Wasserstoffisotops zu bewirken.

In einer besonderen Ausführung können zusätzliche Rüttel- oder Vibrationseinrichtungen (nicht dargestellt) vorgesehen sein, welche dazu eingerichtet sein können, um eine gleichmäßigere Verteilung des Sorbens innerhalb der betreffenden Trennstufe 116 zu erzielen. Um eine Zerkleinerung des Sorbens, das in Form von Partikeln eines Pulvers vorliegen kann, weitgehend zu vermeiden, kann eine punktuell sehr starke externe induktive Heizung eingesetzt werden, um die die Partikeln des Pulvers wieder aufzuschmelzen, um so zu einem Wachstum der Partikeln zu gelangen.

Ein Transport des Sorbens von einem Auslass der Trennstufe 116 zu einem Einlass der Trennstufe 116 kann vorzugsweise über eine mechanische Fördereinrichtung 162, insbesondere eine Förderschnecke oder ein Vibrationsförderer (nicht dargestellt), erfolgen. In einer alternativen Ausführung kann hierzu eine Gasstrahlpumpe (nicht dargestellt), welche mittels eines zirkulierenden, inerten Trägergases betrieben werden kann, dienen. Im Falle, dass in der Trennstufe 116 ein hoher Anteil an Trägergas vorhanden ist, jedoch mit Tritium angereichter Wasserstoff 130 oder an Tritium abgereicherter Wasserstoff als Produkt 132 gewonnen werden soll, so kann hierzu einen Palladium-Permeator eingesetzt werden. In einer besonderen Ausgestaltung kann hierzu jeweils eine Permeator am Einlass und am Auslass der in Figur 1 schematisch dargestellten Kaskade dienen.

In einer weiteren, besonderen Ausführung kann zwischen den einzelnen Trennstufen 116 jeweils eine Schleuse (nicht dargestellt) vorgesehen sein, welche dazu eingerichtet sein kann, um zu verhindern, dass ein zu hoher Austausch an gasförmiger Phase zwischen benachbart angeordneten Trennstufen 116 erfolgen und so die Trennwirkung der Trennstufe 116 verringern könnte.

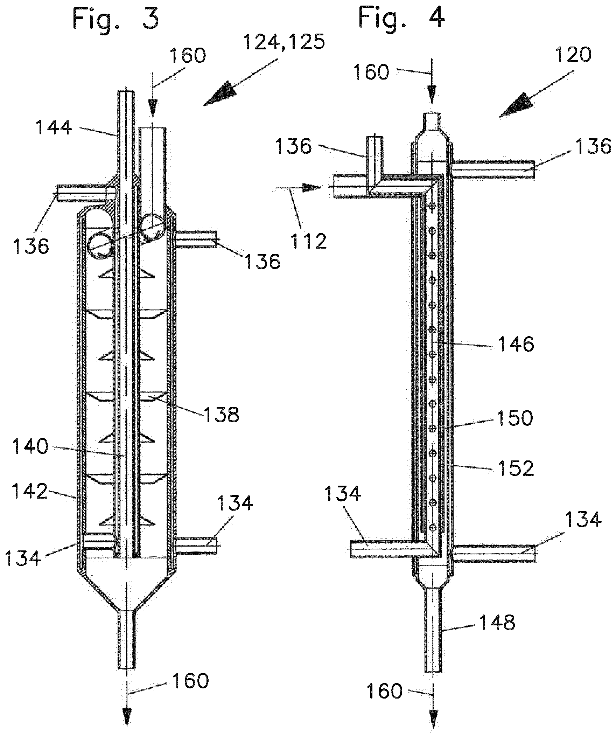

In den Figuren 3 und 4 sind jeweils schematisch bevorzugten Ausführungsformen einer Desoprtionsstufe 124, 125 (Figur 3) bzw. einer Absorptionsstufe 120 (Figur 4) dargestellt. Grundsätzlich können die Ausführung der Desoprtionsstufen 124, 125 und der Absorptionsstufe 120 identisch sein, solange in der Desoprtionsstufe 124, 125 jeweils eine Heizeinrichtung und in der Absorptionsstufe 120 eine Kühleinrichtung vorgesehen ist. Für die Kühleinrichtung ist hierbei jeweils mindestens ein Auslass 134 sowie mindesten ein Einlass 136 für eine Kühlmasse eingerichtet.

Die Ausführung der Desorptionsstufe 124, 125 gemäß Figur 3 ist dazu eingerichtet, dass das in Form eines Pulvers über den Einlass 136 eingebrachte Sorbens über Leitbleche 138, welche auf ein beheizbares, inneres, doppelwandiges Rohr 140 aufgebracht sind, von oben nach unten rieseln können. Hierbei können eingebaute Leitbleche 138 zusätzlich für einen guten Wärmeübergang auf das Sorbens während des Durchlaufens der Desorptionsstufe 124, 125 sorgen. Zusätzlich ist hier ein Heizmantel 142 vorgesehen, welcher dazu eingerichtet ist, um die Temperatur der Desorptionsstufe 124, 125 von außen einzustellen. Das von dem Sorbens desorbierte Gas kann durch ein zentrales Kollektorrohr 144 abgezogen werden, wobei gleichzeitig eine Abtrennung von Partikeln aus dem Sorbens durch die Schwerkraft erreicht werden kann.

Die Ausführung der Absorptionsstufe 120 gemäß Figur 4 ist in analoger Weise zur der Ausführung der Desorptionsstufe 124, 125 gemäß Figur 3 dazu eingerichtet, dass über ein inneres, gelochtes Rohr 146 das Sorbens rieseln und sich mit dem durch ein Gasrohr 148 eintretenden Gas mischen kann. Eine Kühlung des in Form eines Pulvers vorliegenden Sorbens kann hier von innen über ein zentrales Kühlrohr 150 und/oder von außen mittels eines Kühlmantels 152 erreicht werden.

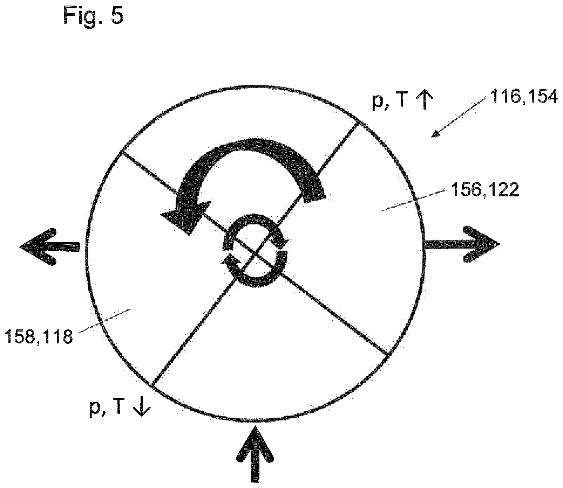

In einer alternativen Ausführung gemäß Figur 5 kann die Trennstufe 116 in Form einer oder mehreren rotierenden Scheiben 154 ausgeführt sein, wobei die Scheibe 154 das Sorbens umfasst oder ein Trägermaterial darstellt, welches mit dem Sorbens beschichtet ist. Die mindestens eine Scheibe 154 kann hierzu auf einer Seite 156 geheizt und auf einer anderen, vorzugsweise gegenüberliegend angeordneten, Seite 158 gekühlt werden. Somit können auch in der Trennstufe 116 gemäß Figur 6 die ersten Bereiche 118 und die zweiten Bereiche 122 erzeugt werden, welche es ermöglichen, dass der Gasstrom und das Sorbens in Kontakt treten können, um Absorption oder Desorption des mindestens einen gewünschten Isotops zu bewirken.

### Bezugszeichenliste

- 110: Vorrichtung
- 112: Zuführung für Gasstrom
- 114: Kaskade
- 116: Trennstufe
- 118: erster Bereich
- 120: Absorptionsstufe
- 122: zweiter Bereich
- 124: erste Desorptionsstufe
- 125: zweite Desorptionsstufe
- 126: Anreicherung
- 128: Abreicherung
- 130: mit Tritium angereichertes, gasförmiges Produkt
- 132: mit Tritium abgereichertes, gasförmiges Produkt
- 134: Auslass für Kühlmasse
- 136: Einlass für Kühlmasse
- 138: Leitbleche
- 140: beheizbares, inneres, doppelwandiges Rohr
- 142: Heizmantel
- 144: zentrales Kollektorrohr
- 146: Inneres, gelochtes Rohr
- 148: Gasrohr
- 150: zentrales Kühlrohr
- 152: Kühlmantel
- 154: Scheibe
- 156: eine Seite
- 158: andere Seite
- 160: Zuführung für Sorbens
- 162: Fördereinrichtung für Sorbens

## Patentansprüche

1. Verfahren zur Anreicherung oder Abreicherung mindestens eines Wasserstoffisotops in einem Gasstrom, umfassend die Schritte:
a) Bereitstellen eines Gasstroms, welcher als gasförmige Bestandteile mindestens zwei verschiedene Wasserstoffisotope oder mindestens eines der Wasserstoffisotope und ein Inertgas aufweist; und
b) Bereitstellen eines bewegten Feststoffs, welcher mindestens ein Sorbens umfasst, wobei das Sorbens derart ausgewählt wird, dass sich die gasförmigen Bestandteile des Gasstroms in einem Ausmaß an Absorption an dem Sorbens voneinander unterscheiden;
**gekennzeichnet durch**
c) Alternierendes Inkontaktbringen des bewegten Feststoffs und des Gasstroms
i) bei mindestens einer ersten Temperatur, bei welcher die Absorption der gasförmigen Bestandteile des Gasstroms an dem Sorbens erfolgt, in mindestens einem ersten Bereich (118), und
ii) bei mindestens zwei zweiten, gegenüber der ersten Temperatur sowie voneinander verschiedenen Temperaturen, bei welcher jeweils eine Desorption eines der Wasserstoffisotope aus den gasförmigen Bestandteilen des Gasstroms von dem Sorbens erfolgt, in mindestens einem zweiten Bereich (122),
wobei der mindestens eine erste Bereich (118) auf der ersten Temperatur und der mindestens eine zweite Bereich (122) auf den zwei zweiten, voneinander verschiedenen Temperaturen gehalten werden;
bis ein gewünschter Grad an Anreicherung oder Abreicherung mindestens eines der Wasserstoffisotope erreicht wird

2. Verfahren nach dem vorangehenden Anspruch, umfassend den weiteren Schritt:
d) Abtrennen des mindestens einen Wasserstoffisotops aus dem Gasstrom.

3. Verfahren nach einem der vorangehenden Ansprüche, wobei das Sorbens eine metallische Substanz umfasst, wobei der Feststoff als Partikel, welche die metallische Substanz umfassen, oder in Form von eines mit der metallischen Substanz beschichteten Trägermaterials bereitgestellt wird.

4. Verfahren nach einem der vorangehenden Ansprüche, wobei jede der zweiten Temperaturen höher gewählt wird als die erste Temperatur.

5. Verfahren nach dem der vorangehenden Anspruch, wobei die erste Temperatur von 77 K bis 298 K und wobei jeder der zweiten Temperaturen von 298 K bis 1000 K gewählt wird.

6. Verfahren nach einem der vorangehenden Ansprüche, wobei das alternierende Inkontaktbringen des bewegten Feststoffs und des Gasstroms in einer Kaskade (114) in mindestens zwei aufeinanderfolgend angeordneten Trennstufen (116), wobei jeder der Trennstufen (116) mindestens eine Absorptionsstufe (120) und mindestens zwei Desorptionsstufen (124, 125) umfasst, wobei die eine Absorptionsstufe (120) auf der ersten Temperatur und jede der Desorptionsstufen (124, 125) bei einer der zweiten Temperaturen gehalten wird, erfolgt.

7. Vorrichtung (110) zur Anreicherung oder Abreicherung mindestens eines Wasserstoffisotops in einem Gasstrom, umfassend
- mindestens eine Einrichtung, welche zur Bereitstellung eines Gasstroms, umfassend als gasförmige Bestandteile mindestens zwei verschiedene Wasserstoffisotope oder mindestens eines der Wasserstoffisotope und ein Inertgas, eingerichtet ist; und
- mindestens eine Einheit zur Aufnahme und Bewegung eines Feststoffs, welcher mindestens ein Sorbens umfasst, wobei die gasförmigen Bestandteile des Gasstroms durch einen Grad an Absorption an dem Sorbens voneinander unterscheidbar sind;
**gekennzeichnet durch**
- mindestens drei gesonderte Temperiereinrichtungen zur Bereitstellung mindestens eines ersten Bereichs (118), welcher auf einer ersten Temperatur haltbar ist, und mindestens eines zweiten Bereichs (122), welcher auf zwei zweiten, gegenüber der ersten Temperatur und voneinander verschiedenen Temperaturen haltbar ist,
wobei der Gasstrom und der Feststoff alternierend durch den mindestens einen ersten Bereich (118) und durch den mindestens einen zweiten Bereich (122) führbar sind.

8. Vorrichtung (110) nach dem vorangehenden Anspruch, wobei das Sorbens eine metallische Substanz umfasst und wobei das Sorbens als Partikel, welche die metallische Substanz umfassen, oder in Form eines mit der metallischen Substanz beschichteten Trägermaterials, vorliegt.

9. Vorrichtung (110) nach einem der vorangehenden Ansprüche betreffend die Vorrichtung, wobei der mindestens eine erste Bereich (118) und der mindestens eine zweite Bereich (122) eine Trennstufe (116) ausbilden, wobei eine Kaskade (114) aus mindestens zwei aufeinanderfolgend angeordneten Trennstufen (116) vorgesehen ist.

10. Vorrichtung (110) nach dem vorangehenden Anspruch, wobei der erste Bereich (118) in Form einer Absorptionsstufe (120) zur Absorption der gasförmigen Bestandteile an dem Sorbens und der zweite Bereich (122) in Form von zwei Desorptionsstufen (124, 125) zur jeweiligen Desorption eines der Wasserstoffisotope aus den gasförmigen Bestandteilen aus dem Sorbens ausgestaltet sind, wobei innerhalb jeder Trennstufe (116) eine Absorptionsstufe (120) und mindestens zwei Desorptionsstufen (124, 125) vorgesehen sind.

11. Vorrichtung (110) nach einem der vorangehenden Ansprüche betreffend die Vorrichtung, wobei die Einheit zur Aufnahme und Bewegung des Feststoffs dazu eingerichtet ist, um alternierend den ersten Bereich (118) und den zweiten Bereich (122) zu durchqueren.

12. Vorrichtung (110) nach dem vorangehenden Anspruch, wobei die Einheit zur Aufnahme und Bewegung des Feststoffs als bewegliche Unterlage oder in Form einer drehbar gelagerten Unterlage ausgestaltet ist.

## Claims

1. Method for enriching or depleting at least one hydrogen isotope in a gas stream, comprising the steps:
a) providing of a gas stream which comprises, as gaseous components, at least two different hydrogen isotopes or at least one of the hydrogen isotopes and an inert gas; and
b) providing of a moved solid which comprises at least one sorbent, wherein the sorbent is selected in such a manner that the gaseous components of the gas stream differ from each other in terms of an extent of absorption on the sorbent;
**characterized by**
c) alternately contacting of the moved solid and the gas stream
i) at at least one first temperature at which absorption of the gaseous components of the gas stream on the sorbent occurs in at least one first region (118), and
ii) at at least two second temperatures which differ from the first temperature and also from one another and at which desorption of one of the hydrogen isotopes among the gaseous components of the gas stream from the sorbent occurs in each case in at least one second region (122),
wherein the at least one first region (118) is maintained at the first temperature and the at least one second region (122) is maintained at the two second temperatures differing from each other;
until a desired degree of enrichment or depletion of at least one of the hydrogen isotopes is attained.

2. Method according to the preceding claim, comprising the further step:
d) separation of the at least one hydrogen isotope from the gas stream.

3. Method according to either of the preceding claims, wherein the sorbent comprises a metallic substance and the solid is provided as particles which comprise the metallic substance or in form of a support material coated with the metallic substance.

4. Method according to any of the preceding claims, wherein each of the second temperatures is selected so as to be higher than the first temperature.

5. Process according to that of the preceding claim, wherein the first temperature is from 77 K to 298 K and each of the second temperatures is from 298 K to 1000 K.

6. Method according to any of the preceding claims, wherein the alternatingly contacting of the moved solid and the gas stream is carried out in a cascade (114) in at least two successive separation stages (116), wherein each of the separation stages (116) comprises at least one absorption stage (120) and at least two desorption stages (124, 125), wherein the one absorption stage (120) is maintained at the first temperature and each of the desorption stages (124, 125) is maintained at one of the second temperatures.

7. Apparatus (110) for enriching or depleting at least one hydrogen isotope in a gas stream, comprising
- at least one device which is equipped for providing a gas stream comprising, as gaseous components, at least two different hydrogen isotopes or at least one of the hydrogen isotopes and an inert gas; and
- at least one unit for accommodating and moving a solid which comprises at least one sorbent, wherein the gaseous components of the gas stream are distinguishable from each other in terms of a degree of absorption on the sorbent;
**characterized by**
- at least two separate temperature control devices for providing at least one first region (118) which can be maintained at a first temperature and at least one second region (122) which can be maintained at two second temperatures which differ from the first temperature and from each other,
wherein the gas stream and the solid can be conveyed alternately through the at least one first region (118) and through the at least one second region (122) .

8. Apparatus (110) according to the preceding claim, wherein the sorbent comprises a metallic substance and the sorbent is present as particles which comprise the metallic substance or in form of a support material coated with the metallic substance.

9. Apparatus (110) according to either of the preceding claims concerning the apparatus, wherein the at least one first region (118) and the at least one second region (122) form a separation stage (116), wherein a cascade (114) comprising at least two successive separation stages (116) are provided.

10. Apparatus (110) according to the preceding claim, wherein the first region (118) is in the form of an absorption stage (120) for absorbing the gaseous components on the sorbent and the second region (122) is in the form of two desorption stages (124, 125) for desorbing one of the hydrogen isotopes in each case among the gaseous components from the sorbent, wherein an absorption stage (120) and at least two desorption stages (124, 125) are provided within each separation stage (116).

11. Apparatus (110) according to any of the preceding claims concerning the apparatus, wherein the unit for accommodating and moving the solid is equipped for alternately passing through the first region (118) and the second region (122).

12. Apparatus (110) according to the preceding claim, wherein the unit for accommodating and moving the solid is configured as movable carrier or in the form of a rotatably mounted carrier.

## Revendications

1. Procédé pour l'enrichissement ou l'appauvrissement d'au moins un isotope de l'hydrogène dans un flux de gaz, comprenant les étapes de :
a) mise à disposition d'un flux de gaz qui présente, en tant qu'ingrédients gazeux, au moins deux isotopes de l'hydrogène différents ou au moins un des isotopes de l'hydrogène et un gaz inerte ; et
b) mise à disposition d'un solide mobile, qui comprend au moins un sorbant, le sorbant étant choisi de telle façon que les ingrédients gazeux du flux de gaz se différencient les uns des autres par un degré d'absorption sur le sorbant ;
**caractérisé par**
c) une mise en contact alternée du solide mobile et du flux de gaz
i) à au moins une première température à laquelle a lieu l'absorption des ingrédients gazeux du flux de gaz au sorbant, dans au moins une première zone (118), et
ii) à au moins deux deuxièmes températures, différentes de la première température ainsi qu'entre elles, auxquelles à chaque fois a lieu une désorption d'un des isotopes de l'hydrogène des ingrédients gazeux du flux de gaz du sorbant, dans au moins une deuxième zone (122),
l'au moins une première zone (118) étant maintenue à la première température et l'au moins une deuxième zone (122) étant maintenue aux deux deuxièmes températures différentes l'une de l'autre ;
jusqu'à ce qu'un degré souhaité d'enrichissement ou d'appauvrissement d'au moins un des isotopes de l'hydrogène soit atteint.

2. Procédé selon la revendication précédente, comprenant l'étape supplémentaire de :
d) séparation de l'au moins un isotope de l'hydrogène du flux de gaz.

3. Procédé selon l'une quelconque des revendications précédentes, le sorbant comprenant une substance métallique, le solide étant mis à disposition en tant que particules qui comprennent la substance métallique, ou sous la forme d'un matériau de support revêtu avec la substance métallique.

4. Procédé selon l'une quelconque des revendications précédentes, chacune des deuxièmes températures étant choisie plus élevée que la première température.

5. Procédé selon la revendication précédente, la première température étant choisie de 77 K à 298 K et chacune des deuxièmes températures étant choisie de 298 K à 1 000 K.

6. Procédé selon l'une quelconque des revendications précédentes, la mise en contact alternée du solide mobile et du flux de gaz ayant lieu dans une cascade (114) dans au moins deux étages de séparation (116) disposés successivement, chacun des étages de séparation (116) comprenant au moins un étage d'absorption (120) et au moins deux étages de désorption (124, 125), l'étage d'absorption (120) étant maintenu à la première température et chacun des étages de désorption (124, 125) étant maintenu à l'une des deuxièmes températures.

7. Dispositif (110) pour l'enrichissement ou l'appauvrissement d'au moins un isotope de l'hydrogène dans un flux de gaz, comprenant
- au moins un appareil, qui est mis en place pour la mise à disposition d'un flux de gaz, comprenant, en tant qu'ingrédients gazeux, au moins deux isotopes de l'hydrogène différents ou au moins un des isotopes de l'hydrogène et un gaz inerte ; et
- au moins une unité pour la réception et le mouvement d'un solide, qui comprend au moins un sorbant, les ingrédients gazeux du flux de gaz étant différenciables les uns des autres par un degré d'absorption sur le sorbant ;
**caractérisé par**
- au moins trois dispositifs de régulation de température séparés pour la mise à disposition d'au moins une première zone (118) qui peut être maintenue à une première température, et au moins une deuxième zone (122), qui peut être maintenue à deux deuxièmes températures différentes de la première température et entre elles,
le flux de gaz et le solide étant guidables en alternance à travers l'au moins une première zone (118) et à travers l'au moins une deuxième zone (122) .

8. Dispositif (110) selon la revendication précédente, le sorbant comprenant une substance métallique et le sorbant étant présent en tant que particules qui comprennent la substance métallique ou sous la forme d'un matériau de support revêtu avec la substance métallique.

9. Dispositif (110) selon l'une quelconque des revendications précédentes concernant le dispositif, l'au moins une première zone (118) et l'au moins une deuxième zone (122) formant un étage de séparation (116), une cascade (114) composée d'au moins deux étages de séparation (116) disposés successivement étant prévue.

10. Dispositif (110) selon la revendication précédente, la première zone (118) étant conçue sous la forme d'un étage d'absorption (120) pour l'absorption des ingrédients gazeux sur le sorbant et la deuxième zone (122) étant conçue sous la forme de deux étages de désorption (124, 125) pour la désorption respective d'un des isotopes de l'hydrogène des ingrédients gazeux du sorbant, un étage d'absorption (120) et au moins deux étages de désorption (124, 125) étant prévus à l'intérieur de chaque étage de séparation (116).

11. Dispositif (110) selon l'une quelconque des revendications précédentes concernant le dispositif, l'unité pour la réception et le mouvement du solide étant mise en place pour traverser en alternance la première zone (118) et la deuxième zone (122).

12. Dispositif (110) selon la revendication précédente, l'unité pour la réception et le mouvement du solide étant conçue en tant que support mobile ou sous la forme d'un support monté rotatif.
